Europäisches Patentamt

European Patent Office

Office européen des brevets

(19)

(11) Publication number: **0 308 106**
**A2**

(12) # EUROPEAN PATENT APPLICATION

(21) Application number: **88308109.3**

(22) Date of filing: **01.09.88**

(51) Int. Cl.⁴: **C08L 23/02 , C08L 91/00 ,
C08J 5/18**

(30) Priority: **02.09.87 US 92019**

(43) Date of publication of application:
**22.03.89 Bulletin 89/12**

(84) Designated Contracting States:
**AT BE CH DE ES FR GB GR IT LI LU NL SE**

(71) Applicant: **W.R. Grace & Co.-Conn. (a
Connecticut corp.)
Grace Plaza 1114 Avenue of the Americas
New York New York 10036(US)**

(72) Inventor: **Mueller, Walter Berndt
Route 2 Box 303H
Inman South Carolina 29349(US)**

(74) Representative: **Collier, Jeremy Austin Grey et
al
J.A.Kemp & Co. 14, South Square Gray's Inn
London WC1R 5EU(GB)**

(54) Polyolefin films with improved oxygen transmission.

(57) A polyolefin film useful in packaging fresh red meats and other products, and having enhanced oxygen transmission rates, comprises an amount of mineral oil sufficient to improve the oxygen transmission of the polyolefin film.

EP 0 308 106 A2

## POLYOLEFIN FILMS WITH IMPROVED OXYGEN TRANSMISSION

### BACKGROUND OF THE INVENTION

This invention relates generally to polyolefin film and more particularly to polyolefin film with additives for enhancing oxygen transmission through the film.

The term "polyolefin" used herein refers to polymers of the 1-monoolefins, as well as copolymers, terpolymers and and ionomers thereof.

For many years, fresh red meat such as fresh beef has been processed into units called subprimals, at a processing plant, and packaged in thermoplastic bags having good oxygen barrier properties combined with high abuse resistance. These bags are then typically vacuumized and heat sealed, and passed through a heat shrink tunnel to shrink the bag about the meat product and form a tight package. This vacuum packaged beef, in subprimal units, is typically put into boxes and distributed to retail food outlets. The meat is there unpackaged and further processed into retail cuts which are then repackaged, typically using polyvinyl chloride film. The retail meat cuts after repackaging are placed in the display case for purchase. The PVC film has relatively high oxygen transmission rates, and permits the fresh red meat to "bloom" thereby providing the desirable red meat color.

More recently, increasing interest has been shown in the concept of processing fresh red meat at the processing plant not only into subprimal cuts, but further processed into retail cuts. This would reduce or eliminate further processing at the point of sale, for example a supermarket, by simply requiring that the retail cuts of meat be placed in a display case.

Several problems are associated with this concept of central preprocessing. A principal problem is the conflicting need of good oxygen barrier properties in the meat product packaging materials from the time that the meat has been cut and packaged at a processing plant until the time the meat is placed in the display case. An opposite conflicting need is the requirement of low oxygen barrier properties i.e. high oxygen transmission rates in the packaging materials when the retail meat cut is finally placed in the display case for consumer purchase. A sufficiently low oxygen transmission rate in the final packaging material will delay or reduce blooming of the red meat, thereby presenting an esthetically undesirable package for the consumer.

A solution to these countervailing requirements is the adoption of a package system in which a resin having low oxygen transmission rates, i.e. good oxygen barrier properties, is used in combination with resins having relatively high oxygen transmission rates. A portion of the packaging material, containing the oxygen barrier material, is peeled away from the package prior to placing the meat containing package in a display case at retail point-of-sale. The remaining portion of the package, having the high transmission material, permits oxygen to enter the package. Examples of this arrangement are found in U. S. Patent Nos. 3,574,642 (Weinke) and 4,055,672 (Hirsch et al).

Of course, a constant consideration in such packaging systems is the use of economic materials in an efficient film process to provide a system meeting both conflicting needs at a reasonable cost.

Most thermoplastic materials that provide economic options for this purpose, and in particular most polyolefin materials do not possess sufficient oxygen transmission properties under the conditions typically encountered in retail meat display, to provide a rapid blooming of the meat product.

It is therefore an object of the present invention to provide a polyolefin film with enhanced oxygen transmission properties.

It is a further object of the present invention to provide a polyolefin film which will permit rapid blooming of fresh red meat.

It is a further object of the present invention to provide a polyolefin with the above advantages, and which is also compatible with packaging systems having high oxygen barrier i.e. low oxygen transmission properties.

Of interest is U.S. Patent No. 4,325,850 issued to Mueller discloses the use of a combination of an antiblock agent, a slip agent, and a plasticizing oil as an additive to polyolefin film for reducing the blocking tendency of polyolefin materials. A suitable plasticizing oil is liquid petrolatum or heavy mineral oil, in amounts ranging from about 250 to about 40,000 ppm. Polyolefin materials include copolymers of ethylene and vinyl acetate, and polymers of ethylene of low, medium and high density.

In the article Improve The Impact Resistance Of Thermoplastics With Amoco Polybutenes, 1986, it is taught that resin manufacturers and compounders typically add USP mineral oil to some grades of polystyrene and polypropylene resin to improve flow. The mineral oil is used in comparative examples in amounts ranging up to about four parts per hundred resin.

## SUMMARY OF THE INVENTION

In one aspect of the present invention, a thermoplastic polyolefin film having improved oxygen transmission properties comprises a sufficient amount of mineral oil to increase the oxygen transmission of the polyolefin film.

In another aspect of the present invention, in a process for making a polyolefin thermoplastic film, the improvement comprises adding a sufficient amount of mineral oil to the polyolefin film prior to extrusion to increase the oxygen transmission of the polyolefin film, and extruding the film.

## DETAILED DESCRIPTION OF THE PREFERRED EMBODIMENT

It has been found that the use of relatively small amounts of mineral oil, preblended with a polyolefin thermoplastic material, produces an increase in oxygen transmission of the polyolefin film without a significant increase in water vapor transmission rates.

This is best exemplified by reference to the following Table I, in which oxygen transmission data and water vapor transmission data have been itemized for nine separate film structures.

The first of these film structures, labeled Example 1, a control example, was an extruded film having an ethylene vinyl acetate copolymer (EVA) without the addition of mineral oil, and unirradiated. The particular resin used was Elvax 3135, an EVA with 12% vinyl acetate content, available from du Pont.

The next of these film structures, labeled Example 2, was a monolayer polyolefin film comprising 90% EVA (Elvax 3135) and 10% of a high viscosity mineral oil. This film was extruded with the polyolefin preblended with the mineral oil.

Example 3 was the same as Example 2, with the additional processing step of irradiating the extruded film to a level of about 8.8 megarads.

Examples 4 and 5 each represent a three layer structure in which the two outer layers comprised an EVA with 4% vinyl acetate by weight (Exxon 32.89), and the core layer comprised EVA (Elvax 3135). In Example 4, the film was coextruded without subsequent irradiation. In Example 5, the coextruded film was irradiated to a dosage of about 8.8 megarads.

Examples 6 and 7 represent similar coextruded films, each having two outer layers of a blend of about 85% EVA (Exxon 32.89) and about 15% mineral oil. The core layer in each of examples 6 and 7 was a blend of 90% EVA (Elvax 3135) and 10% mineral oil. The only difference between examples 6 and 7 was that example 6 was not irradiated whereas example 7 was irradiated to a dosage of about 8.8 megarads.

Examples 8 and 9 each represent a five layer film having the structure A/B/A/B/A. In each of these examples, layers A comprised a blend of about 90% EVA (Exxon 32.89) and about 10% mineral oil. In Example 8, layer B comprised a blend of about 94% very low density polyethylene (DGM 910) and about 6% mineral oil. Example 9 had a similar blend in layers B, but with about 96% VLDPE and about 4% mineral oil. Both Examples 8 and 9 were coextruded and the quenched tape was irradiated to a dosage level of about 8.8 megarads. The moisture vapor transmission rate (MVTR) was measured in units of grams/24 hours, 100 square inches/mil according to ASTM F372. Oxygen transmission was measured according to ASTM D3985 in units of CC/24 hours, square meter, atmosphere/mil.

TABLE I

| | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| MVTR | | | | | | | | | |
| @ 100° F | | | | | | | | | |
| SAMPLE 1 | 1.84 | 2.10 | 2.05 | 1.20 | 1.29 | 1.44 | 1.22 | 0.76 | 1.04 |
| SAMPLE 2 | 1.90 | 1.95 | 2.10 | 1.14 | 1.26 | 1.47 | 1.47 | 0.76 | 0.96 |
| SAMPLE 3 | 1.80 | 2.20 | 2.08 | 1.30 | 1.14 | 1.44 | 1.44 | 0.79 | 0.96 |
| GAUGE | | | | | | | | | |
| SAMPLE 1 | 3.42 | 3.22 | 3.29 | 3.37 | 3.10 | 3.37 | 3.82 | 4.09 | 2.96 |
| SAMPLE 2 | 3.30 | 3.41 | 3.14 | 3.33 | 3.26 | 3.31 | 3.27 | 3.95 | 3.18 |
| SAMPLE 3 | 3.46 | 3.07 | 3.04 | 3.04 | 3.46 | 3.43 | 3.27 | 4.00 | 3.27 |
| AVERAGE NORMALIZED VALUE | 6.26 | 6.72 | 6.55 | 3.92 | 4.01 | 4.89 | 4.74 | 3.09 | 3.09 |
| $O_2$ TRANSMISSION | | | | | | | | | |
| @ 73° F 0% R.H. | | | | | | | | | |
| SAMPLE 1 | 3592.7 | 5953.5 | 5156.5 | 4042.1 | 4582.9 | 5478.5 | 6076.6 | 5210.3 | 6111.2 |
| SAMPLE 2 | 4108.9 | 5685.4 | 5685.4 | 3537.9 | 3719.0 | 5640.3 | 5194.7 | 4899.6 | 5355.0 |
| SAMPLE 3 | 4002.1 | 6166.0 | 5176.4 | 3199.8 | 3541.2 | 6201.0 | 4900.6 | 4828.8 | 6981.6 |
| GAUGE | | | | | | | | | |
| SAMPLE 1 | 3.46 | 3.16 | 3.03 | 3.21 | 3.13 | 3.28 | 3.24 | 3.78 | 3.07 |
| SAMPLE 2 | 3.32 | 3.35 | 3.19 | 3.15 | 3.36 | 3.57 | 3.48 | 3.87 | 3.12 |
| SAMPLE 3 | 3.28 | 3.03 | 3.17 | 3.34 | 3.29 | 3.19 | 3.82 | 3.92 | 2.00 |
| AVERAGE NORMALIZED VALUE | 13067 | 18847 | 16723 | 11602 | 12831 | 19295 | 18827 | 19146 | 16477 |

It is clear from the data of Table I that very significant improvement in oxygen transmission rates was obtained by the addition of mineral oil to the polyolefin materials. For instance, Example 2 showed a 44% increase in oxygen transmission compared with Example 1. These were both unirradiated materials, the difference being the presence of about 10% mineral oil in the polyolefin film of Example 2. Example 3, which was irradiated, still showed an improvement of about 28% over the $O_2$ transmission rate of Example 1.

These increased rates are important for proper and rapid blooming of fresh red meat in a retail display. Materials with lower transmission rates tend to bloom more slowly, thereby requiring longer periods of time in the display case before the desirable red color associated with fresh red meat is obtained. It is beneficial from a marketing standpoint to obtain the red bloom of the meat as quickly as possible after the meat has been placed in the display case.

In the case of PVC film, the typical shelf life of a meat product wrapped with PVC is about 3 days in a display case environment, using 60 gauge film. This is believed to be at least partially the result of relatively high moisture vapor transmission rates which adversely affect total shelf life. It will be noted from the data of Table I that in accordance with the present invention, even though significant improvements in oxygen transmission were obtained, these were achieved without a significant increase in water vapor or moisture vapor transmission rates (MVTR). The polyolefin film of Example 2 showed an increase of only about 7.4% in MVTR when compared with the film of Example 1. The film of Example 3 showed only a 4.6% increase compared with the film of Example 2.

The multilayer films of Examples 6 and 7, using the mineral oil as an additive, showed even more striking results compared with the control films of Examples 4 and 5.

The film of Example 6, employing mineral oil in the three layer structure, showed a 66% improvement in oxygen transmission rates compared with a similar film without the mineral oil (Example 4). This improvement was achieved while increasing the water vapor transmission rate only 22%.

The irradiated film of Example 7, having mineral oil, showed an improvement in oxygen transmission rate of about 47% compared with the similar film without mineral oil added, of Example 5. Both examples were irradiated materials. At the same time, the undesirable increase in water vapor transmission rate was only about 18%.

In another series of tests, three of the film examples (Examples 3, 7, and 8) were evaluated by means of a colorimeter, and by subjective evaluation, to examine retail color development of beef rib eye and round steaks in relation to the oxygen transmission rates of these films. Polyvinyl chloride (PVC) film was similarly evaluated as a control film.

Bags having a width of about 6.5 inches were made from the films described for Examples 3, 7, and 8 of Table 1. A fresh beef top round and a vacuum-packaged beef ribeye were cut into three quarter inch steaks and five steaks from each subprimal were packaged in each of the three films. Each sample was vacuum packaged on a Multivac AG 800 unit. The steaks were then placed in P870 pouches available from W. R. Grace & Co. and flushed with 100% $N_2$ to an oxygen level of less than about .05%. These gas flushed steaks were then stored in the dark at between 30° and 35° F. After four days the steaks were removed from the $N_2$ atmosphere and placed in an open retail meat display case held at a temperature of about 31° F.

Hunter a values were measured on each steak and on freshly cut, PVC overwrapped control samples at varying time intervals over the next five days. Hunter a values were determined using a colorimeter.

Cap muscle discoloration (CMD) in the ribeye steak and heat ring discoloration (HRD) in the round steaks were evaluated subjectively using a 10-point percentage discoloration scale (1 = 0-10% discoloration; 10 = 91-100% discoloration).

The results of the tests are demonstrated in Table 2.

In that table, the overall mean Hunter a values were significantly higher for all three of the films of the present invention compared with the PVC control with respect to the ribeye, and were about the same or higher than the PVC control with respect to round steak with the exception of Example 8.

While CMD was higher for the films of the present invention, HRD was considerably lower for Example 7 and 3 than for the PVC control film.

TABLE 2

| Film | Ribeye | | Round | |
|---|---|---|---|---|
| | A value | CMD | A value | HRD |
| PVC (control) | 13.06 | 1.08 | 17.17 | 6.65 |
| Example 7 | 16.77 | 2.89 | 16.50 | 3.30 |
| Example 8 | 17.25 | 2.91 | 14.24 | 7.01 |
| Example 3 | 17.14 | 3.35 | 17.67 | 3.09 |

Tables 3 and 4 tabulate the mean Hunter a values of ribeye steaks and round steaks respectively, tray overwrapped with PVC or vacuum packaged in the three high oxygen permeability films of the present invention.

TABLE 3

| Time(hrs) | PVC | Example 7 | Example 8 | Example 3 |
|---|---|---|---|---|
| 0 | 9.90 | 10.30 | 9.99 | 10.71 |
| 1 | 14.68 | 14.90 | 14.66 | 15.60 |
| 2 | 15.45 | 16.02 | 16.06 | 17.22 |
| 4 | 14.55 | 17.60 | 18.15 | 18.72 |
| 8 | 14.56 | 18.22 | 19.14 | 19.97 |
| 24 | 13.90 | 18.98 | 18.73 | 17.74 |
| 32 | 13.60 | 17.95 | 18.80 | 18.14 |
| 48 | 12.74 | 17.41 | 18.26 | 17.98 |
| 56 | 12.01 | 17.21 | 18.21 | 17.71 |
| 72 | 11.48 | 17.53 | 18.47 | 17.58 |
| 80 | 12.54 | 17.32 | 17.74 | 17.26 |
| 96 | 12.38 | 17.30 | 17.91 | 17.16 |
| 104 | 11.99 | 17.25 | 18.15 | 16.97 |

TABLE 4

| Time(hrs) | PVC | Example 7 | Example 8 | Example 3 |
|---|---|---|---|---|
| 0 | 17.08 | 11.87 | 12.74 | 12.81 |
| 1 | 20.89 | 16.22 | 18.37 | 16.96 |
| 2 | 23.21 | 18.51 | 18.96 | 19.29 |
| 4 | 24.06 | 20.42 | 20.27 | 19.52 |
| 8 | 24.22 | 20.46 | 19.12 | 19.98 |
| 24 | 18.73 | 18.37 | 15.61 | 19.90 |
| 32 | 18.17 | 17.82 | 14.57 | 18.64 |
| 48 | 15.62 | 16.74 | 12.94 | 18.15 |
| 56 | 15.04 | 16.48 | 11.96 | 18.00 |
| 72 | 13.10 | 15.29 | 11.17 | 17.59 |
| 80 | 12.14 | 14.87 | 10.40 | 17.17 |
| 96 | 10.48 | 13.78 | 9.64 | 16.37 |
| 104 | 10.52 | 13.74 | 9.34 | 15.32 |

Tables 5 and 6 indicate the CMD and HRD discoloration scores respectively by film type and evaluation time.

TABLE 5

| Time(hrs) | PVC | Example 7 | Example 8 | Example 3 |
|---|---|---|---|---|
| 0 | 1.0 | 1.0 | 1.0 | 1.0 |
| 1 | 1.0 | 1.0 | 1.0 | 1.0 |
| 2 | 1.0 | 1.0 | 1.0 | 1.0 |
| 4 | 1.0 | 1.0 | 1.0 | 1.0 |
| 8 | 1.0 | 1.0 | 1.0 | 1.0 |
| 24 | 1.0 | 1.0 | 1.0 | 1.0 |
| 32 | 1.0 | 1.0 | 1.0 | 1.0 |
| 48 | 1.0 | 4.6 | 1.0 | 5.4 |
| 56 | 1.0 | 3.6 | 2.8 | 4.4 |
| 72 | 1.0 | 4.8 | 6.2 | 6.0 |
| 80 | 1.0 | 6.4 | 7.0 | 6.6 |
| 96 | 1.5 | 6.0 | 7.2 | 7.4 |
| 104 | 1.5 | 5.2 | 6.6 | 6.8 |

TABLE 6

| Time(hrs) | PVC | Example 7 | Example 8 | Example 3 |
|---|---|---|---|---|
| 0 | 7.0 | 2.8 | 5.8 | 2.2 |
| 1 | 2.5 | 2.7 | 6.3 | 2.1 |
| 2 | 3.0 | 2.2 | 7.6 | 2.5 |
| 4 | 5.5 | 2.6 | 5.8 | 2.6 |
| 8 | 6.5 | 1.8 | 6.4 | 2.2 |
| 24 | 6.5 | 2.2 | 6.6 | 2.4 |
| 32 | 7.0 | 2.2 | 7.2 | 2.2 |
| 48 | 7.5 | 2.6 | 7.2 | 2.2 |
| 56 | 7.0 | 2.4 | 6.8 | 3.0 |
| 72 | 8.0 | 2.8 | 7.4 | 3.2 |
| 80 | 8.0 | 3.8 | 7.4 | 2.8 |
| 96 | 9.0 | 7.2 | 8.2 | 6.4 |
| 104 | 9.0 | 7.6 | 8.4 | 6.4 |

The optimal amount of mineral oil to be added to a particular polyolefin in order to achieve the best combination of properties will to some extent depend on the particular polyolefin. In the case of ethlyene vinyl acetate copolymer, while some results will be obtained at levels as low as 5%, optimally about 10% by weight of the resin of mineral oil is added to achieve the best results. Greater than about 15% concentration of mineral oil in the EVA will create an oversaturated condition so that no further benefits are obtained, and excess oil is present in the system.

In the case of very low density polyethylene, results are obtained with as little as 1% mineral oil, and preferably 3 to 4% mineral oil is used. A concentration of greater than 4% mineral oil in the VLDPE will lead to oversaturation of the resin. Those skilled in the art will appreciate that suitable optimal ranges will be obtained for other polyolefin materials, both homopolymers and copolymers, as well as other materials including terpolymers and ionomers.

Of course, the most preferred percentage of mineral oil in a particular polyolefin will depend on a variety of requirements, including the sensitivity of the packaged material to water vapor, the desired oxygen transmission rate, and other factors.

The mineral oil used is preferably a high viscosity oil to help offset some loss in modulus and tensile strength. The high viscosity correlates to higher modulus values.

While illustrative examples have been given above concerning preferred embodiments of the present invention, those skilled in the art will understand that further modifications and variations in the amount of oil used, the types of host materials, and specific multilayer structures will be readily apparent after a review of this disclosure. These variations are believed to be within the scope and spirit of the invention as defined

7

below in the claims.

## Claims

1. A thermoplastic polyolefin film having improved oxygen transmission properties comprising a sufficient amount of mineral oil to increase the oxygen transmission of the polyolefin film.

2. The film according to claim 1 wherein the polyolefin is ethylene vinyl acetate copolymer.

3. The film according to claim 2 wherein the polyolefin film comprises between about 5% and 15% mineral oil.

4. The film according to claim 2 wherein the polyolefin film comprises about 10% mineral oil.

5. The film according to claim 1 wherein the polyolefin is very low density polyethylene.

6. The film according to claim 5 wherein the polyolefin film comprises between about 2% and 6% mineral oil.

7. The film according to claim 5 where the polyolefin film comprises about 4% mineral oil.

8. A process for making a polyolefin thermoplastic film, comprising adding a sufficient amount of mineral oil to the polyolefin prior to extrusion to increase the oxygen transmission of the polyolefin film, and extruding the film.

9. The process according to claim 8 wherein the extruded film is irradiated to a dosage of between about 1 and 15 megarads.

10. The process according to claim 9 wherein the extruded film is irradiated to a dosage of between about 6 and 12 megarads.

11. The process according to claim 9 wherein the extruded film is irradiated to a dosage of about 9 megarads.